# EUROPÄISCHE PATENTSCHRIFT

(11) **EP 2 115 013 B1**
(45) Veröffentlichungstag und Bekanntmachung des Hinweises auf die Patenterteilung: **11.04.2018**
(21) Anmeldenummer: 08708640.1
(22) Anmeldetag: 04.02.2008
(51) Int. Cl.: C08F 220/06

(54) **VERFAHREN ZUR HERSTELLUNG WASSERABSORBIERENDER POLYMERPARTIKEL DURCH POLYMERISATION VON TROPFEN EINER MONOMERLÖSUNG**
METHOD FOR PRODUCING WATER-ABSORBENT POLYMER PARTICLES BY THE POLYMERISATION OF DROPLETS OF A MONOMER SOLUTION
PROCÉDÉ DE PRODUCTION DE PARTICULES POLYMÈRES HYDROABSORBANTES PAR POLYMÉRISATION DE GOUTTES D'UNE SOLUTION MONOMÈRE

(30) Priorität: 06.02.2007 EP 07101831
(43) Veröffentlichungstag der Anmeldung: 11.11.2009
(73) Patentinhaber: BASF SE, 67056 Ludwigshafen am Rhein (DE)
(72) Erfinder: LÖSCH, Dennis, 67122 Altrip (DE); KRÜGER, Marco, 68161 Mannheim (DE); BLEI, Stefan, 68163 Mannheim (DE); WEISMANTEL, Matthias, 63637 Jossgrund (DE); HEIDE, Wilfried, 67251 Freinsheim (DE)
(74) Vertreter: BASF IP Association
(86) Internationale Anmeldenummer: PCT/EP2008/051336
(87) Internationale Veröffentlichungsnummer: WO 2008/095892

(56) Entgegenhaltungen:
- EP-A- 1 690 887
- WO-A-2006/079631

## Beschreibung

Die vorliegende Erfindung betrifft ein Verfahren zur Herstellung wasserabsorbierender Polymerpartikel durch Polymerisation von Tropfen einer Monomerlösung in einer umgebenden Gasphase, wobei die Monomerlösung mindestens eine Azoverbindung und mindestens ein Persulfat enthält, die erhaltenen Polymerpartikel einen Wassergehalt von mindestens 5 Gew.-% aufweisen und mindestens 5 Minuten bei einer Temperatur von mindestens 100°C thermisch nachbehandelt werden.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 348 180 A1, WO 96/40427 A1, US 5,269,980, DE 103 14 466 A1, DE 103 40 253 A1 und DE 10 2004 024 437 A1, WO 2006/077054 A1 sowie der älteren deutschen Anmeldung mit dem Aktenzeichen 102006001596.7 und der älteren PCT-Anmeldung mit dem Aktenzeichen PCT/EP2006/062252 beschrieben.

WO 96/40427 A1 beschreibt ein Verfahren zur Sprühpolymerisation zur Herstellung von wasserabsorbierenden Polymerpartikeln mit niedrigem Wassergehalt. In den Beispielen wurde eine Mischung aus Azoverbindung und Persulfat als Polymerisationsinitiator eingesetzt.

Aufgabe der vorliegenden Erfindung war die Bereitstellung eines verbesserten Verfahrens zur Herstellung wasserabsorbierender Polymerpartikel durch Polymerisation von Tropfen einer Monomerlösung in einer die Tropfen umgebenden Gasphase. Insbesondere war es eine Aufgabe der vorliegenden Erfindung ein Verfahren bereitzustellen, das Polymerpartikel mit wenig Restmonomeren erzeugt.

Gelöst wurde die Aufgabe durch ein Verfahren zur Herstellung wasserabsorbierender Polymerpartikel durch Polymerisation von Tropfen einer Monomerlösung, enthaltend
a) mindestens ein ethylenisch ungesättigtes Monomer,
b) wahlweise einen Vernetzer,
c) mindestens eine Azoverbindung,
d) mindestens ein Persulfat und
e) Wasser,
in einer umgebenden Gasphase, dadurch gekennzeichnet, dass die erhaltenen Polymerpartikel einen Wassergehalt von mindestens 5 Gew.-% aufweisen und mindestens 5 Minuten bei einer Temperatur von mindestens 100°C thermisch nachbehandelt werden.

Der Wassergehalt der erhaltenen Polymerpartikel beträgt vorzugsweise von 8 bis 40 Gew.-%, besonders bevorzugt von 10 bis 30 Gew.-%, ganz besonders bevorzugt von 12 bis 20 Gew.-%.

Die thermische Nachbehandlung wird vorzugsweise von 5 bis 120 Minuten, besonders bevorzugt von 8 bis 60 Minuten, ganz besonders bevorzugt von 10 bis 30 Minuten, durchgeführt.

Die Temperatur bei der thermischen Nachbehandlung beträgt vorzugsweise von 120 bis 200°C, besonders bevorzugt von 140 bis 180°C, ganz besonders von 150 bis 170°C.

Die vorliegenden Erfindung liegt die Erkenntnis zugrunde, dass Azoverbindungen und Persulfate unterschiedlich stabil sind. Die Azoverbindungen zerfallen üblicherweise schnell in Radikale. Im Gegensatz dazu sind Persulfate relativ langsame Polymerisationsinitiatoren. Dies bedeutet, dass die durch Polymerisation von Tropfen einer Monomerlösung erhaltenen wasserabsorbierenden Polymerpartikel noch signifikante Mengen an Persulfat enthalten. Diese Persulfate zerfallen während der thermischen Nachbehandlung und vermindern damit die Restmonomeren. Wichtig ist hierbei, dass die Polymerpartikel nicht zu trocken sind. Bei zu trockenen Partikeln nehmen die Restmonomeren nur unwesentlich ab. Ein zu hoher Wassergehalt erhöht die Verbackungsneigung der Polymerpartikel.

Gleichzeitig bewirkten die während der thermischen Nachbehandlung zerfallenden Persulfate eine mehr oder weniger starke Abnahme der Vernetzungsdichte, wodurch die Zentrifugenretentionskapazität (CRC) steigt und die Absorption unter Druck (AUL0.7psi) fällt. Dieser Effekt kann beispielsweise durch eine höhere Einsatzmenge an Vernetzer b) kompensiert werden.

Während der thermischen Nachbehandlung liegt der Wassergehalt der Polymerpartikel im Bereich von vorzugsweise 5 bis 40 Gew.-%, besonders bevorzugt von 8 bis 30 Gew.-%, ganz besonders von 10 bis 20 Gew.-%.

Die wasserabsorbierenden Polymerpartikel können in fluidisiertem Zustand in Gegenwart eines Gasstromes, enthaltend mindestens 0,25 kg Wasserdampf pro kg trockenes Gas, thermisch nachbehandelt werden.

Der Wasserdampfgehalt des Gases beträgt vorzugsweise von 1 bis 10 kg pro kg trockenes Gas, besonders bevorzugt von 2 bis 7,5 kg pro kg trockenes Gas, ganz besonders bevorzugt von 3 bis 5 kg pro kg trockenes Gas.

Die übrigen Bestandteile des Gases sind vorzugsweise Luft oder Stickstoff.

Im fluidisierten Zustand ist die kinetische Energie der Polymerpartikel größer als das Kohäsions- bzw. Adhäsionspotential zwischen den Polymerpartikeln.

Der fluidisierte Zustand kann durch ein Wirbelbett erreicht werden. Dabei werden die wasserabsorbierenden Polymerpartikel von unten angeströmt, so dass die Partikel eine Wirbelschicht ausbilden. Die Höhe der Wirbelschicht wird durch Gasmenge und Gasgeschwindigkeit, d.h. über den Druckverlust der Wirbelschicht (kinetische Energie des Gases), eingestellt.

Die Geschwindigkeit des Gasstromes beträgt vorzugsweise von 0,5 bis 2,5 m/s, besonders bevorzugt von 0,8 bis 1,5 m/s, ganz besonders bevorzugt von 0,9 bis 1,2 m/s.

Durch Kontakt mit einem strömenden Gas können die Restmonomeren zusätzlich vermindert werden. Damit die wasserabsorbierenden Polymerpartikel dabei nicht zu schnell trocknen muss das anströmende Gas bereits Wasserdampf enthalten.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ).

Die Monomerlösung enthält vorzugsweise höchstens 160 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Polymerisationsinhibitoren können aber auch durch Absorption, beispielsweise an Aktivkohle, aus der Monomerlösung entfernt werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Monomerlösung enthält vorzugsweise mindestens 0,1 Gew.-%, bevorzugt mindestens 0,2 Gew.-%, besonders bevorzugt mindestens 0,3 Gew.-%, ganz besonders bevorzugt mindestens 0,4 Gew.-%, Vernetzer b), jeweils bezogen auf Monomer a).

Geeignete Azoverbindungen c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid.

Die Menge an Azoverbindung c) beträgt vorzugsweise mindestens 0,1 Gew.-%, besonders bevorzugt mindestens 0,25 Gew.-%, ganz besonders bevorzugt mindestens 0,5 Gew.-%, bezogen auf die Monomeren a).

Geeignete Persulfate sind beispielsweise Natriumpersulfat, Ammoniumperoxodisulfat, Natriumperoxodisulfat und Kaliumperoxodisulfat.

Die Menge an Persulfat d) beträgt vorzugsweise mindestens 0,25 Gew.-%, besonders bevorzugt mindestens 0,5 Gew.-%, ganz besonders bevorzugt mindestens 0,75 Gew.-%, bezogen auf die Monomeren a).

Als weitere Initiatoren können sämtliche unter den Polymerisationsbedingungen in Radikale zerfallende Verbindungen eingesetzt werden, beispielsweise Peroxide, Hydroperoxide, Wasserstoffperoxid, und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden.

Besonders bevorzugte weitere Initiatoren sind Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Wasserstoffperoxid/Hydroxymethylsulfinsäure, und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b), Azoverbindung c) und Persulfat d).

Der Sauerstoffgehalt der Monomerlösung beträgt vorzugsweise mindestens 1 Gew.-ppm, besonders bevorzugt mindestens 2 Gew.-ppm, ganz besonders bevorzugt mindestens 5 Gew.-ppm. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Die Monomerlösung wird zur Polymerisation in die Gasphase dosiert. Der Sauerstoffgehalt der Gasphase beträgt vorzugsweise 0,001 bis 0,15 Vol.-%, besonders bevorzugt 0,002 bis 0,1 Vol.-%, ganz besonders bevorzugt 0,005 bis 0,05 Vol.-%.

Die Gasphase enthält neben Sauerstoff vorzugsweise nur inerte Gase, d.h. Gase, die unter Reaktionsbedingungen nicht in die Polymerisation eingreifen, beispielsweise Stickstoff und/oder Wasserdampf.

Die Monomerlösung wird unter Ausbildung von Tropfen in die Gasphase dosiert. Die Tropfen können beispielsweise mittels einer Vertropferplatte erzeugt werden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Der Vertropfer wird im Strömungsbereich des laminaren Strahlzerfalls betrieben, d.h. die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 100. Der Druckverlust über die Bohrung beträgt vorzugsweise weniger als 2,5 bar, besonders bevorzugt weniger als 1,5 bar, ganz besonders bevorzugt weniger als 1 bar.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks. Der Durchmesser der Bohrungen wird an die gewünschte Tropfengröße angepasst.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten Tropfen weisen einen mittleren Durchmesser von vorzugsweise mindestens 200 µm, besonders bevorzugt von mindestens 250 µm, ganz besonders bevorzugt von mindestens 300 µm, auf, wobei der Tropfendurchmesser durch Lichtstreuung bestimmt werden kann und den volumengemittelten mittleren Durchmesser bedeutet.

Der Polymerisationsreaktor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von unten nach oben. Vorzugsweise wird das Gas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Die Gasgeschwindigkeit wird vorzugsweise so eingestellt, dass die Strömung im Polymerisationsreaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Reaktionstemperatur beträgt bei der thermisch induzierten Polymerisation 100 bis 250°C, besonders bevorzugt 120 bis 200°C, ganz besonders bevorzugt 150 bis 180°C.
Die Reaktion kann im Überdruck oder im Unterdruck durchgeführt werden, ein Unterdruck von bis zu 100 mbar gegenüber dem Umgebungsdruck ist bevorzugt.
Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet. Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird. Das Reaktionsprodukt wird anschließend thermisch nachbehandelt und wahlweise getrocknet, vorzugsweise in mindestens einer Wirbelschicht.

Die Polymerpartikel können zur weiteren Verbesserung der Eigenschaften nachvernetzt werden.
Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder ß-Hydroxyalkylamide, wie in DE 102 04 938 A1 und US 6,239,230 beschrieben.
Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250°C, bevorzugt 180 bis 220°C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.
Das erfindungsgemäße Verfahren ermöglicht die Herstellung wasserabsorbierender Polymerpartikel mit sehr niedrigem Gehalt an Restmonomeren.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

Die gemäß dem erfindungsgemäßen Verfahren erhältlichen wasserabsorbierenden Polymerpartikel weisen einen Gehalt an Restmonomern von typischerweise weniger als 0,1 Gew.-%, vorzugsweise weniger als 0,07 Gew.-%, besonders bevorzugt weniger als 0,05 Gew.-%, ganz besonders bevorzugt von weniger als 0,04 Gew.-%, auf. Der Gehalt an Restmonomeren wird gemäß der von der EDANA (European Disposables and Nonwovens Association) empfohlenen Testmethode Nr. 410.2-02 "Residual monomers" bestimmt.

Der mittlere Durchmesser der gemäß dem erfindungsgemäßen Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

Ein weiterer Gegenstand der vorliegenden Erfindung sind gemäß dem erfindungsgemäßen Verfahren erhältliche wasserabsorbierende Polymerpartikel.

Die wasserabsorbierenden Polymerpartikel werden mittels der nachfolgend beschriebenen Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomer (Residual Monomers)

Der Gehalt an Restmonomer der wasserabsorbierenden Polymerpartikel wird gemäß der von der EDANA (European Disposables and Nonwovens Association) empfohlenen Testmethode Nr. 410.2-02 "Residual monomers" bestimmt.

### Wassergehalt (Moisture Content)

Der Wassergehalt der wasserabsorbierenden Polymerpartikel wird gemäß der von der EDANA (European Disposables and Nonwovens Association) empfohlenen Testmethode Nr. 430.2-02 "Moisture content" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Absorption unter Druck (AUL0.7psi Absorbency Under Load)

Die Absorption unter Druck wird analog der von der EDANA (European Disposables and Nonwovens Association) empfohlenen Testmethode Nr. 442.2-02 " Absorption under pressure" bestimmt, wobei ein Gewicht mit 49 g/cm³ (0,7psi) statt ein Gewicht mit 21 g/cm³ (0,3psi) verwendet wird.

Die EDANA-Testmethoden sind beispielsweise erhältlich bei der European Disposables and Nonwovens Association, Avenue Eugene Plasky 157, B-1030 Brüssel, Belgien.

### Beispiele:

### Beispiel 1

14,153 kg Natriumacrylat (37,5 gew.-%ige Lösung in Wasser), 1,620 kg Acrylsäure und 0,226 kg Wasser wurden mit 28 g 15-fach ethoxiliertem Trimethylolpropantriacrylat als Vernetzer gemischt. Die Lösung wurde in einen erwärmten, mit Stickstoffatmosphäre gefüllten Vertropfungsturm vertropft (12m Höhe, 2m Breite, Gasgeschwindigkeit 0,1 m/s im Gleichstrom). Die Dosiergeschwindigkeit der Monomerlösung betrug 16 kg/h. Die Vertropferplatte wies 30 Bohrungen à 170 µm auf. Die Gasvorwärmung wurde so geregelt, dass die Gasaustrittstemperatur konstant 125°C betrug. Der Initiator wurde kurz vor dem Vertropfer über einen statischen Mischer mit der Monomerlösung gemischt.

Als Initiator wurde eine 4,8 gew.-%ige Lösung von 2,2'-Azobis[2-(2-imidazolin-2-yl)propan]dihydrochlorid in Wasser verwendet. Die Dosiergeschwindigkeit der Initiatorlösung betrug 0,569 kg/h.

Die erhaltenen Polymerpartikel hatten einen Wassergehalt von 18,1 Gew.-% und wurden eine Stunde bei 160°C im Trockenschrank thermisch nachbehandelt.

Anschließend wurden die erhaltenen wasserabsorbierenden Polymerpartikel analysiert. Die Ergebnisse sind in Tabelle 1 zusammengefaßt:

### Beispiel 2

14,356 kg Natriumacrylat (37,5 gew.-%ige Lösung in Wasser) und 1,644 kg Acrylsäure wurden mit 29 g 15-fach ethoxiliertem Trimethylolpropantriacrylat als Vernetzer gemischt. Die Lösung wurde in einen erwärmten, mit Stickstoffatmosphäre gefüllten Vertropfungsturm vertropft (2m Breite, Gasgeschwindigkeit 0,1 m/s im Gleichstrom). Die Dosiergeschwindigkeit der Monomerlösung betrug 16 kg/h. Die Vertropferplatte wies 30 Bohrungen à 170 µm auf. Die Gasvorwärmung wurde so geregelt, dass die Gasaustrittstemperatur konstant 125°C betrug. Kurz vor dem Vertropfer wurde die Monomerlösung über einen statischen Mischer mit zwei Initiatorlösungen gemischt.

Als Initiator 1 wurde eine 4,8 gew.-%ige Lösung von 2,2'-Azobis[2-(2-imidazolin-2-yl)propan]dihydrochlorid in Wasser verwendet. Die Dosiergeschwindigkeit der Initiatorlösung 1 betrug 0,577 kg/h.

Als Initiator 2 wurde eine 3,3 gew.-%ige Lösung von Natriumperoxodisulfat in Wasser verwendet. Die Dosiergeschwindigkeit der Initiatorlösung 2 betrug 0,412 kg/h.

Die erhaltenen Polymerpartikel hatten einen Wassergehalt von 17,8 Gew.-% und wurden eine Stunde bei 160°C im Trockenschrank thermisch nachbehandelt.

Anschließend wurden die erhaltenen wasserabsorbierenden Polymerpartikel analysiert. Die Ergebnisse sind in Tabelle 1 zusammengefaßt:

### Beispiel 3

14,356 kg Natriumacrylat (37,5 gew.-%ige Lösung in Wasser) und 1,644 kg Acrylsäure wurden mit 29 g 15-fach ethoxiliertem Trimethylolpropantriacrylat als Vernetzer gemischt. Die Lösung wurde in einen erwärmten, mit Stickstoffatmosphäre gefüllten Vertropfungsturm vertropft (2m Breite, Gasgeschwindigkeit 0,1 m/s im Gleichstrom). Die Dosiergeschwindigkeit der Monomerlösung betrug 16 kg/h. Die Vertropferplatte wies 30 Bohrungen à 170 µm auf. Die Gasvorwärmung wurde so geregelt, dass die Gasaustrittstemperatur konstant 125°C betrug. Kurz vor dem Vertropfer wurde die Monomerlösung über einen statischen Mischer mit zwei Initiatorlösungen gemischt.

Als Initiator 1 wurde eine 4,8 gew.-%ige Lösung von 2,2'-Azobis[2-(2-imidazolin-2-yl)propan]dihydrochlorid in Wasser verwendet. Die Dosiergeschwindigkeit der Initiatorlösung 1 betrug 0,577 kg/h.

Als Initiator 2 wurde eine 3,3 gew.-%ige Lösung von Natriumperoxodisulfat in Wasser verwendet. Die Dosiergeschwindigkeit der Initiatorlösung 2 betrug 0,577 kg/h.

Die erhaltenen Polymerpartikel hatten einen Wassergehalt von 18,4 Gew.-% und wurden eine Stunde bei 160°C im Trockenschrank thermisch nachbehandelt.

Anschließend wurden die erhaltenen wasserabsorbierenden Polymerpartikel analysiert. Die Ergebnisse sind in Tabelle 1 zusammengefaßt:

### Beispiel 4

14,356 kg Natriumacrylat (37,5 gew.-%ige Lösung in Wasser) und 1,644 kg Acrylsäure wurden mit 29 g 15-fach ethoxiliertem Trimethylolpropantriacrylat als Vernetzer gemischt. Die Lösung wurde in einen erwärmten, mit Stickstoffatmosphäre gefüllten Vertropfungsturm vertropft (2m Breite, Gasgeschwindigkeit 0,1 m/s im Gleichstrom). Die Dosiergeschwindigkeit der Monomerlösung betrug 16 kg/h. Die Vertropferplatte wies 30 Bohrungen à 170 µm auf. Die Gasvorwärmung wurde so geregelt, dass die Gasaustrittstemperatur konstant 125°C betrug. Kurz vor dem Vertropfer wurde die Monomerlösung über einen statischen Mischer mit zwei Initiatorlösungen gemischt.

Als Initiator 1 wurde eine 6,1 gew.-%ige Lösung von 2,2'-Azobis[2-(2-imidazolin-2-yl)propan]dihydrochlorid in Wasser verwendet. Die Dosiergeschwindigkeit der Initiatorlösung 1 betrug 0,444 kg/h.

Als Initiator 2 wurde eine 6,1 gew.-%ige Lösung von Natriumperoxodisulfat in Wasser verwendet. Die Dosiergeschwindigkeit der Initiatorlösung 2 betrug 0,444 kg/h.

Die erhaltenen Polymerpartikel hatten einen Wassergehalt von 17,8 Gew.-% und wurden eine Stunde bei 160°C im Trockenschrank thermisch nachbehandelt.

Anschließend wurden die erhaltenen wasserabsorbierenden Polymerpartikel analysiert. Die Ergebnisse sind in Tabelle 1 zusammengefaßt:

### Beispiel 5

14,356 kg Natriumacrylat (37,5 gew.-%ige Lösung in Wasser) und 1,644 kg Acrylsäure wurden mit 29 g 15-fach ethoxiliertem Trimethylolpropantriacrylat als Vernetzer gemischt. Die Lösung wurde in einen erwärmten, mit Stickstoffatmosphäre gefüllten Vertropfungsturm vertropft (2m Breite, Gasgeschwindigkeit 0,1 m/s im Gleichstrom). Die Dosiergeschwindigkeit der Monomerlösung betrug 16 kg/h. Die Vertropferplatte wies 30 Bohrungen à 170 µm auf. Die Gasvorwärmung wurde so geregelt, dass die Gasaustrittstemperatur konstant 125°C betrug. Kurz vor dem Vertropfer wurde die Monomerlösung über einen statischen Mischer mit zwei Initiatorlösungen gemischt.

Als Initiator 1 wurde eine 6,1 gew.-%ige Lösung von 2,2'-Azobis[2-(2-imidazolin-2-yl)propan]dihydrochlorid in Wasser verwendet. Die Dosiergeschwindigkeit der Initiatorlösung 1 betrug 0,444 kg/h.

Als Initiator 2 wurde eine 9,1 gew.-%ige Lösung von Natriumperoxodisulfat in Wasser verwendet. Die Dosiergeschwindigkeit der Initiatorlösung 2 betrug 0,444 kg/h.

Die erhaltenen Polymerpartikel hatten einen Wassergehalt von 17,3 Gew.-% und wurden eine Stunde bei 160°C im Trockenschrank thermisch nachbehandelt.

Anschließend wurden die erhaltenen wasserabsorbierenden Polymerpartikel analysiert. Die Ergebnisse sind in Tabelle 1 zusammengefaßt:

**Tab. 1: thermische Nachbehandlung**

| Bsp. | Initiator 1 [Gew.-%]*) | Initiator 2 [Gew.-%]*) | Restmonomer [Gew.-%] | Wasser [Gew.-%] | CRC [g/g] | AUL0.7psi [g/g] |
|---|---|---|---|---|---|---|
| 1**) | 0,50 | | 0,245 | 2,4 | 33,9 | 25,4 |
| 2 | 0,50 | 0,25 | 0,028 | 3,6 | 33,2 | 25,2 |
| 3 | 0,50 | 0,35 | 0,054 | 1,4 | 34,3 | 23,4 |
| 4 | 0,50 | 0,50 | 0,037 | 2,6 | 37,3 | 15,9 |
| 5 | 0,50 | 1,00 | 0,025 | 1,0 | 36,8 | 18,1 |

| | | | | | | |
|---|---|---|---|---|---|---|
| *) bezogen auf Acrylsäure **) Vergleichsbeispiel | | | | | | |

## Patentansprüche

1. Verfahren zur Herstellung wasserabsorbierender Polymerpartikel durch Polymerisation von Tropfen einer Monomerlösung, enthaltend
a) mindestens ein ethylenisch ungesättigtes Monomer,
b) wahlweise einen Vernetzer,
c) mindestens eine Azoverbindung,
d) mindestens ein Persulfat und
e) Wasser,
in einer umgebenden Gasphase bei einer Temperature von 100°C-250°C, **dadurch gekennzeichnet, dass** die erhaltenen Polymerpartikel einen Wassergehalt von mindestens 5 Gew.-% aufweisen und mindestens 5 Minuten bei einer Temperatur von mindestens 100°C thermisch nachbehandelt werden.

2. Verfahren gemäß Anspruch 1, **dadurch gekennzeichnet, dass** der Wassergehalt der Polymerpartikel während der thermischen Nachbehandlung im Bereich von 5 bis 40 Gew.-% liegt.

3. Verfahren gemäß Anspruch 1 oder 2, **dadurch gekennzeichnet, dass** Monomer a) zu mindestens 50 mol-% Acrylsäure ist.

4. Verfahren gemäß einem der Ansprüche 1 bis 3, **dadurch gekennzeichnet, dass** die Monomerlösung mindestens 0,1 Gew.-% Vernetzer b), bezogen auf Monomer a), enthält.

5. Verfahren gemäß einem der Ansprüche 1 bis 4, **dadurch gekennzeichnet, dass** die Monomerlösung mindestens 0,1 Gew.-% Azoverbindung c), bezogen auf Monomer a), enthält.

6. Verfahren gemäß einem der Ansprüche 1 bis 5, **dadurch gekennzeichnet, dass** die Monomerlösung mindestens 0,1 Gew.-% Persulfat d), bezogen auf Monomer a), enthält.

7. Verfahren gemäß einem der Ansprüche 1 bis 6, **dadurch gekennzeichnet, dass** die Tropfen einen mittleren Durchmesser von mindestens 200 µm aufweisen.

8. Wasserabsorbierende Polymerpartikel, erhältlich gemäß einem Verfahren der Ansprüche 1 bis 7, wobei die Polymerpartikel einen Gehalt an Restmonomeren von weniger als 0,1 Gew.-% aufweisen.

9. Polymerpartikel gemäß Anspruch 8, wobei die Polymerpartikel einen mittleren Durchmesser von mindestens 200 µm aufweisen.

10. Polymerpartikel gemäß Anspruch 8 oder 9, wobei die Polymerpartikel eine Zentrifugenretentionskapazität von mindestens 15 g/g aufweisen.

## Claims

1. A process for producing water-absorbing polymer particles by polymerizing droplets of a monomer solution comprising
a) at least one ethylenically unsaturated monomer,
b) optionally a crosslinker,
c) at least one azo compound,
d) at least one persulfate and
e) water,
in a surrounding gas phase at a temperature of 100°C-250°C, wherein the resulting polymer particles have a water content of at least 5% by weight and are aftertreated thermally at a temperature of at least 100°C for at least 5 minutes.

2. The process according to claim 1, wherein the water content of the polymer particles during the thermal aftertreatment is in the range from 5 to 40% by weight.

3. The process according to claim 1 or 2, wherein monomer a) is acrylic acid to an extent of at least 50 mol%.

4. The process according to any of claims 1 to 3,
wherein the monomer solution comprises at least 0.1% by weight of crosslinker b), based on monomer a) .

5. The process according to any of claims 1 to 4,
wherein the monomer solution comprises at least 0.1% by weight of azo compound c), based on monomer a) .

6. The process according to any of claims 1 to 5,
wherein the monomer solution comprises at least 0.1% by weight of persulfate d), based on monomer a) .

7. The process according to any of claims 1 to 6,
wherein the droplets have a mean diameter of at least 200 µm.

8. Water-absorbing polymer particles obtainable by a process of claims 1 to 7, said polymer particles having a content of residual monomers of less than 0.1% by weight.

9. Polymer particles according to claim 8, said polymer particles having a mean diameter of at least 200 µm.

10. Polymer particles according to claim 8 or 9, said polymer particles having a centrifuge retention capacity of at least 15 g/g.

## Revendications

1. Procédé de fabrication de particules polymères absorbant l'eau par polymérisation de gouttes d'une solution de monomères, contenant :
a) au moins un monomère éthyléniquement insaturé,
b) éventuellement un agent de réticulation,
c) au moins un composé azo,
d) au moins un persulfate et
e) de l'eau,
dans une phase gazeuse environnante à une température de 100 °C à 250 °C, **caractérisé en ce que** les particules polymères obtenues présentent une teneur en eau d'au moins 5 % en poids et sont post-traitées thermiquement pendant au moins 5 minutes à une température d'au moins 100 °C.

2. Procédé selon la revendication 1, **caractérisé en ce que** la teneur en eau des particules polymères pendant le post-traitement thermique se situe dans la plage allant de 5 à 40 % en poids.

3. Procédé selon la revendication 1 ou 2, **caractérisé en ce que** le monomère a) est de l'acide acrylique à hauteur d'au moins 50 % en moles.

4. Procédé selon l'une quelconque des revendications 1 à 3, **caractérisé en ce que** la solution de monomères contient au moins 0,1 % en poids d'agent de réticulation b), par rapport au monomère a).

5. Procédé selon l'une quelconque des revendications 1 à 4, **caractérisé en ce que** la solution de monomères contient au moins 0,1 % en poids de composé azo c), par rapport au monomère a).

6. Procédé selon l'une quelconque des revendications 1 à 5, **caractérisé en ce que** la solution de monomères contient au moins 0,1 % en poids de persulfate d), par rapport au monomère a).

7. Procédé selon l'une quelconque des revendications 1 à 6, **caractérisé en ce que** les gouttes présentent un diamètre moyen d'au moins 200 µm.

8. Particules polymères absorbant l'eau, pouvant être obtenues par un procédé selon les revendications 1 à 7, les particules polymères présentant une teneur en monomères résiduels de moins de 0,1 % en poids.

9. Particules polymères selon la revendication 8, les particules polymères présentant un diamètre moyen d'au moins 200 µm.

10. Particules polymères selon la revendication 8 ou 9, les particules polymères présentant une capacité de rétention centrifuge d'au moins 15 g/g.
